# EUROPEAN PATENT APPLICATION

(11) **EP 4 598 041 A1**
(43) Date of publication of application: **06.08.2025**
(21) Application number: 23870969.5
(22) Date of filing: 27.09.2023
(51) Int. Cl.: H04N 23/73

(54) **LIGHT-REPLENISHMENT CONTROL METHOD AND APPARATUS FOR VIDEO CALL, AND DEVICE AND STORAGE MEDIUM**

(30) Priority: 30.09.2022 CN 202211215141
(71) Applicant: Beijing Zitiao Network Technology Co., Ltd., Beijing 100190 (CN)
(72) Inventor: MIAO, Wang, Beijing 100028 (CN)
(74) Representative: Marks & Clerk LLP
(86) International application number: PCT/CN2023/122240
(87) International publication number: WO 2024/067743

(57) **Abstract**

The embodiment of the present disclosure provides a method for controlling supplemental lighting for a video call, an apparatus, a device and a storage medium. In response to current ambient brightness being lower than a brightness threshold, a screen supplemental lighting function is enabled, and a first exposure parameter is obtained according to first ambient brightness after the screen supplemental lighting function is enabled and a video call parameter, where the video call parameter is used for representing a video call quality of a current video call. Video shooting is performed according to the first exposure parameter to obtain a target video for the video call.

## Description

### RELATED APPLICATIONS

This application claims priority to Chinese Patent Application No. 202211215141.6 filed on September 30, 2022, and entitled "METHOD FOR CONTROLLING SUPPLEMENTAL LIGHTING FOR VIDEO CALL, APPARATUS, DEVICE AND STORAGE MEDIUM", the entire contents of which are incorporated herein by reference.

### FIELD

The embodiment of the present disclosure relates to the technical field of video processing, in particular to a method for controlling supplemental lighting for a video call, an apparatus, a device and a storage medium.

### BACKGROUND

Currently, with the continuous improvement of network bandwidth and communication quality, Internet-based video call functions have been widely developed and applied, and the communication efficiency between users is effectively improved through high-resolution and real-time video shooting and display.

### SUMMARY

According to a first aspect, an embodiment of the present disclosure provides a method for controlling supplemental lighting for a video call, including:

in response to a current ambient brightness being lower than a brightness threshold, enabling screen supplemental lighting function, and obtaining a first exposure parameter according to first ambient brightness after the screen supplemental lighting function is enabled and a video call parameter, where the video call parameter is used for representing a video call quality of a current video call; performing video shooting according to the first exposure parameter to obtain a target video for the video call.

According to a second aspect, an embodiment of the present disclosure provides apparatus for controlling supplemental lighting for a video call, including:
a control module, configured to, in response to a current ambient brightness being lower than a brightness threshold, enabling a screen supplemental lighting function, and obtain a first exposure parameter according to first ambient brightness after the screen supplemental lighting function is enabled and a video call parameter, where the video call parameter is used for representing a video call quality of a current video call;
a shooting module, configured to, performing video shooting according to the first exposure parameter to obtain a target video for the video call.

According to a third aspect, an embodiment of the present disclosure provides an electronic device, including:
a processor, and a memory communicatively connected to the processor;
the memory stores computer executable instructions;
the computer executable instructions stored in the memory, when executed by the processor, implement the method for controlling supplemental lighting for a video call as described in the first aspect and various possible designs of the first aspect.

According to a fourth aspect, an embodiment of the present disclosure provides a computer readable storage medium storing computer executable instructions, where the computer executable instructions, when executed by the processor, implement the method for controlling supplemental lighting for a video call as described in the first aspect and various possible designs of the first aspect.

According to a fifth aspect, an embodiment of the present disclosure provides a computer program, where the computer program, when executed by a computer, implements the method for controlling supplemental lighting for a video call as described in the first aspect and various possible designs of the first aspect.

According to a sixth aspect, an embodiment of the present disclosure provides a computer program product, including a computer program, where the computer program, when executed by a processor, implements the method for controlling supplemental lighting for a video call as described in the first aspect and various possible designs of the first aspect. According to the method for controlling supplemental lighting for a video call, the apparatus, the device and the storage medium, in response to a current ambient brightness being lower than a brightness threshold, screen supplemental lighting function is enabled, and a first exposure parameter is obtained according to first ambient brightness after the screen supplemental lighting function is enabled and a video call parameter, where the video call parameter is used for representing a video call quality of a current video call; video shooting is performed according to the first exposure parameter to obtain a target video for the video call.

### BRIEF DESCRIPTION OF DRAWINGS

In order to more clearly illustrate the technical solutions in the embodiments of the present disclosure or in the prior art, the accompanying drawings used in the description of the embodiments or the prior art will be briefly introduced below, and it is obvious that the drawings in the following description are some embodiments of the present disclosure, and for those of ordinary skill in the art, other drawings may be obtained according to these drawings without creative labor.
FIG. 1 is an application scenario diagram of a method for controlling supplemental lighting for a video call according to an embodiment of the present disclosure.
FIG. 2 is a first schematic flowchart of a method for controlling supplemental lighting for a video call according to an embodiment of the present disclosure.
FIG. 3 is a flowchart of an implementation process of obtaining a first exposure parameter of step S102 in the embodiment shown in FIG. 2.
FIG. 4 is a schematic diagram of a corresponding relationship between exposure duration and video frame rate according to an embodiment of the present disclosure.
FIG. 5 is a schematic diagram of a position of a gaze point according to an embodiment of the present disclosure.
FIG. 6 is a schematic diagram of an implementation of detecting a position of a gaze point of a user according to an embodiment of the present disclosure.
FIG. 7 is a second schematic flowchart of a method for controlling supplemental lighting for a video call according to an embodiment of the present disclosure.
FIG. 8 is a third schematic flowchart of a method for controlling supplemental lighting for a video call according to an embodiment of the present disclosure.
FIG. 9 is a schematic diagram of a supplemental lighting area according to an embodiment of the present disclosure.
FIG. 10 is a flowchart of an implementation process of step S305 in the embodiment shown in FIG. 8.
FIG. 11 is a structural block diagram of an apparatus for controlling supplemental lighting for a video call according to an embodiment of the present disclosure.
FIG. 12 is a schematic structural diagram of an electronic device according to an embodiment of the present disclosure.
FIG. 13 is a schematic diagram of a hardware structure of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

Currently, with the continuous improvement of network bandwidth and communication quality, Internet-based video call functions have been widely developed and applied, and the communication efficiency between users is effectively improved through high-resolution and real-time video shooting and display. However, in a video call process, if the ambient brightness is low, the quality of the video shot by the terminal device may be directly affected, resulting in poor image quality of the video call.

The following describes an application scenario of an embodiment of the present disclosure.

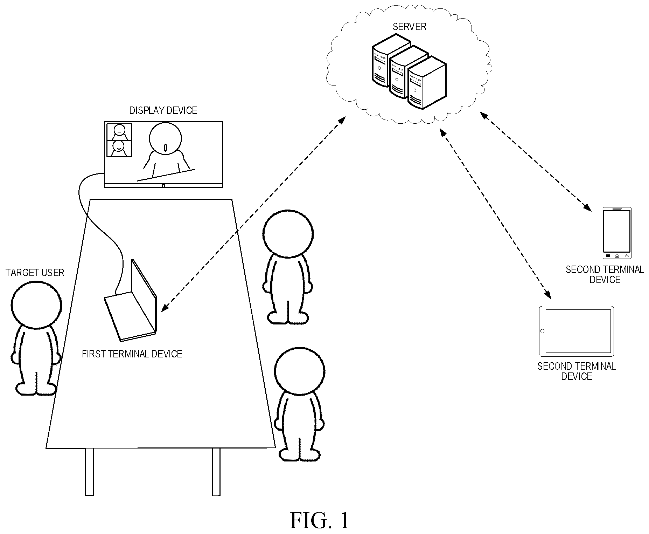

FIG. 1 is an application scenario diagram of a method for controlling supplemental lighting for a video call according to an embodiment of the present disclosure. For example, as shown in FIG. 1, the method provided in the embodiments of the present disclosure may be applied to a first terminal device (for example, a smart phone, a personal computer, etc.). In one aspect, the first terminal device collects an image of a target user using a camera unit (for example, a camera built in or externally connected to the terminal device) by way of running a video conference client, and is in communication connection with a server side (shown as a server in the figure), thereby implementing video connections with one or more second terminal devices on which the video conference client is running; on the other hand, the first terminal device is in communication connection with a display device (for example, a display screen, a smart television, a projection device, etc.), and the first terminal device projects the video content of the video conference onto the display device for presentation.

In a video conference scenario as shown in FIG. 1, or for example, in a scenario in which a video call is conducted outdoors, the first terminal device used to shoot a video is usually in a dark light environment due to insufficient illumination, resulting in a problem of low brightness, unclear video of a video shot by the first terminal device, and the like. In order to avoid the influence of the dark light environment on video shooting and subsequent video livestreaming and video calling, in related arts, the video quality may be improved by adjusting an exposure parameter, for example, increasing the exposure duration and the light sensitivity (ISO) when the terminal device shoots the image, however, the problems such as video jamming and noise increase may be caused, thereby affecting the presentation of subsequent video content.

Embodiments of the present disclosure provide a method for controlling supplemental lighting for a video call, which solves the above problem by enabling a screen supplemental lighting function and dynamically adjusting an exposure parameter of a screen supplemental lighting function based on ambient brightness and video call parameters.

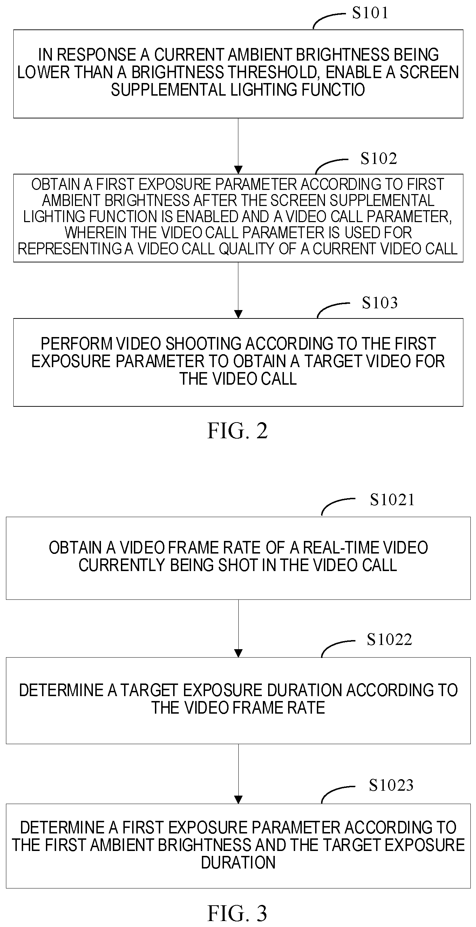

Referring to FIG. 2, FIG. 2 is a first schematic flowchart of a method for controlling supplemental lighting for a video call according to an embodiment of the present disclosure. The method of this embodiment may be applied to a first terminal device, and the method for controlling supplemental lighting for a video call includes:
Step S101: in response to current ambient brightness being lower than a brightness threshold, enabling a screen supplemental lighting function.

For example, this embodiment provides a method for controlling supplemental lighting for a video call, which may be applied to an application scenario such as video livestreaming and video conference. Specifically, the first terminal device is, for example, a smart phone, a personal computer, or the like.

For example, the terminal device is provided with a light sensor for detecting ambient brightness, and the terminal device may detect the current ambient brightness in real time using the light sensor. Further, if the current ambient brightness is greater than or equal to a predetermined brightness threshold, the image captured in the conventional manner can meet the specific needs of video livestreaming, video conference, and the like; and if the current ambient brightness is lower than the predetermined brightness threshold, the image captured in the conventional manner cannot meet the specific needs of video livestreaming and video conference, and therefore corresponding processing needs to be performed to improve brightness and resolution of the captured image.

Specifically, in response to the first terminal device detecting that the current ambient brightness is lower than the brightness threshold, the screen supplemental lighting function is enabled, and the ambient brightness can be improved by illumination provided by the screen. There is a plurality of implementations of screen supplemental lighting, for example, increasing the overall screen brightness of the screen area to provide additional lighting; for another example, using the light-emitting properties of the screen, a sub-area emitting white light, that is, a supplemental lighting area, is configured in the screen area to provide additional lighting, thereby improving the environment brightness.

Step S102: obtaining a first exposure parameter according to first ambient brightness after the screen supplemental lighting function is enabled and a video call parameter, where the video call parameter is used for representing a video call quality of a current video call.

Further, after the screen supplemental lighting is enabled, the first terminal device obtains a matching first exposure parameter according to the current first ambient brightness and the video call parameter, for example, the first exposure parameter includes at least one of ISO, exposure duration (or shutter speed), or aperture value; the video call parameter is used to represent the video call quality of the current video call, and may be a factor affecting the video call quality, for example, network bandwidth, video call frame rate, and the like. As the video call quality decreases, the brightness of the video image may be improved by extending the exposure duration, and the user perception is not affected; therefore, by combining the video call parameter and the first exposure parameter, the image shot by the first terminal device by the camera unit meets a reasonable range of exposure value in the video call process (that is, the image brightness is not too high or too low). Optionally, the first exposure parameter is an optimized exposure parameter obtained based on a predetermined automatic exposure (AE) algorithm, and the first exposure parameter may use an exposure duration as short as possible and an ISO as low as possible while ensuring that the image captured by the first terminal device is within a reasonable range of exposure value, thereby improving the quality of the generated image. Specific implementations of the AE algorithm are prior art, and details are not described herein.

In a possible implementation, as shown in FIG. 3, an implementation of obtaining the first exposure parameter in step S102 includes:
Step S1021: obtaining a video frame rate of a real-time video currently being shot in the video call.
Step S1022: determining a target exposure duration according to the video frame rate.

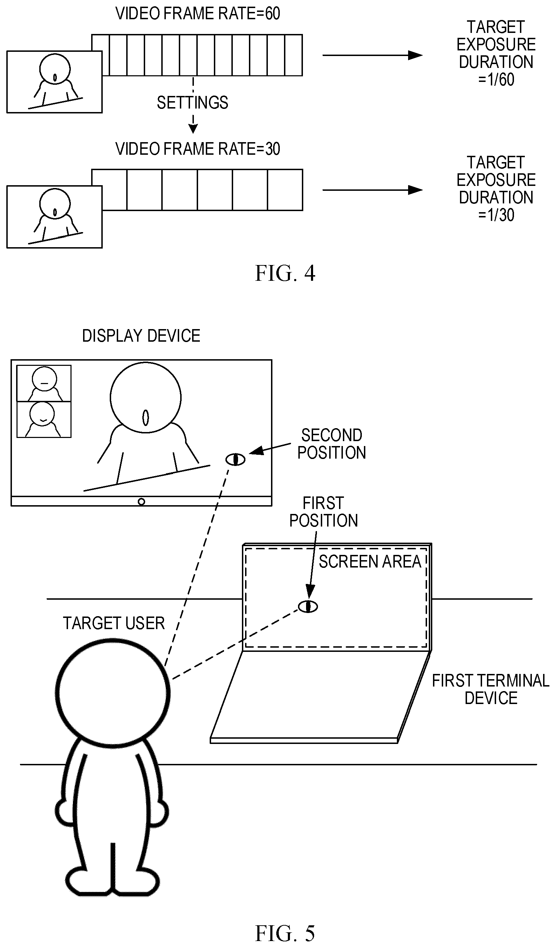

For example, referring to the schematic diagram of the application scenario shown in FIG. 1, during the video call, the first terminal device may collect the video data in real time and perform data transmission. By perform parameter reading on the real-time video, the video frame rate of the real-time video may be determined, for example, 30 frames per second, 60 frames per second, etc. The higher the video frame rate is, the smoother the video is. In order to avoid the problem of smear and blur of the captured image (which is the composition of the video), the target exposure duration of the first terminal device (the camera unit of the first terminal device) is required to be less than or equal to the time interval corresponding to the video frame rate. FIG. 4 is a schematic diagram of a corresponding relationship between exposure duration and video frame rate according to an embodiment of the present disclosure, as shown in FIG. 4, in a case that the video frame rate is set to 60 frames per second, the corresponding inter-frame time interval is 1/60 second, at this time, the corresponding target exposure duration should be less than or equal to 1/60 second, as shown in the figure, the target exposure duration is 1/60 second; and in a case that the video frame rate is set to 30 frames per second, the target exposure duration is 1/30 second. Therefore, according to the constraining relationship between the two, the target exposure duration matching the video frame rate may be determined.

Step S1023: determine a first exposure parameter according to the first ambient brightness and the target exposure duration.

For example, after obtaining the target exposure duration, the corresponding ISO and/or aperture value may be calculated using the AE algorithm based on the target exposure duration and a predetermined target exposure value used to meet the video brightness requirement, so as to determine the first exposure parameter used to capture the target video. In this embodiment, by forming a fixed mapping between the video frame rate and the target exposure duration, the target exposure duration may improve the image brightness to the maximum extent without causing the smear, thereby optimizing the first exposure parameter and improving the resolution and brightness of the captured video.

In another possible implementation, the step S102 of obtaining the first exposure parameter includes:
Step (a): obtaining a network bandwidth parameter, where the network bandwidth parameter represents a current available network bandwidth,
Step (b): determining a target exposure duration based on the network bandwidth parameter,
Step (c): determining the first exposure parameter according to the first ambient brightness and the target exposure duration.

For example, the network bandwidth parameter represents the current available network bandwidth, the larger the current available network bandwidth is, the better the network condition is; correspondingly, the lower the latency of the video call is, the higher the resolution is; and vice versa. In a case that the available network bandwidth is small, the upper limit of the optimal quality of the video call that can be achieved by the video call process itself is relatively low, that is, there will be a certain degree of delay and other problems, at this time, even if the exposure duration is very short, there may be a problem of video image delay. Therefore, in the case that the available network bandwidth is small, a large target exposure duration may be configured, thereby improving the brightness of the video image and improving the video quality. The network bandwidth parameter and the target exposure duration may be determined directly based on a predetermined mapping relationship, and specific implementations are not described herein.

In a possible implementation, in response to the first terminal device detecting that the current environment brightness is lower than the brightness threshold, a position of a gaze point of the user is further detected, where in a case that the user observes the object through binocular vision, there is an observation range, and the gaze point is used to indicate the observation range, and more specifically, for example, the gaze point may be a center point of the observation range. Through the position of the gaze point, the target object gazed through the current binocular vision of the user may be determined. In this embodiment, for example, the position of the gaze point includes at least a first position and a second position, where the first position represents a position in a screen area of the first terminal device, and the second position represents a position outside the screen area of the first terminal device. FIG. 5 is a schematic diagram of a position of a gaze point according to an embodiment of the present disclosure, referring to FIG. 5, a screen area of the first terminal device corresponds to a screen contour of the first terminal device, and when the target user gazes at the screen area, the position of the gaze point is the first position, that is, the gaze point is located in the screen area of the first terminal device; when the user gazes at a position outside the screen area, for example, in the application scenario shown in FIG. 1, when the target user gazes at the display device, the position of the gaze point is the second position, that is, the gaze point is located outside the screen area of the first terminal device.

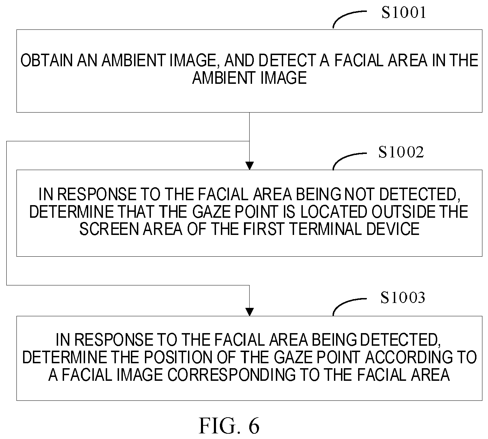

Further, the target gaze point of the user may be determined by collecting a facial image of the user. For example, FIG. 6 is a schematic diagram of implementation steps of detecting a position of a gaze point of a user according to an embodiment of the present disclosure, which include:
Step S1001: obtaining an ambient image and detect a facial area in the ambient image.
Step S1002: in response to the facial area being detected, determining the position of the gaze point according to a facial image corresponding to the facial area.
Step S1003: in response to the facial area not being detected, determining that the gaze point is located outside the screen area of the terminal device.

For example, the first terminal device is configured with a camera unit, for example, a camera module, to collect an ambient image through the camera unit, and to detect a facial area in the ambient image, in a possible case, if the ambient brightness is relatively dark, a facial image (that is, a face) may not be able to be recognized in the captured ambient image, and at this time, because a facial area of the user cannot be further determined, the default gaze point is located outside the screen area of the first terminal device. In another possible case, if the ambient brightness is sufficient, the first terminal device may recognize the facial area through the captured ambient image, and further perform image processing according to the facial image corresponding to the facial area to identify a binocular (pupil) position of the user, and further determine a position of the gaze point according to a relationship between the binocular position and the surrounding environment (determined by the ambient image). Specific methods for identifying the facial area from the ambient image, and specific methods for determining the position of the gaze point according to the facial image corresponding to the facial area may be implemented using a pre-trained neural network, and details are not described herein.

Step S103: performing video shooting according to the first exposure parameter to obtain a target video for the video call.

For example, after obtaining the first exposure parameter, the video shooting is performed based on the first exposure parameter, to obtain the target video for the video call, for example, after the target video is sent to the server, the video data sending process corresponding to the specific application such as video conference and video livestreaming is completed. After the screen is enabled, the environment brightness of the environment in which the first terminal device is located is improved, so that the brightness of the target video shot may be directly improved, meanwhile, based on the first exposure parameter set at the high ambient brightness (the first ambient brightness), the resolution of the target video shot may be more effectively improved compared with the initial exposure parameter configured at the previous low brightness, and jamming and noise are reduced, so that the quality of the generated target video image is generally improved.

In this embodiment, in response to the current ambient brightness being lower than the brightness threshold, the screen supplemental lighting function is enabled, and the first exposure parameter is obtained according to the first ambient brightness after the screen supplemental lighting function is enabled and the video call parameter, where the video call parameter is used for representing the video call quality of the current video call; and the video shooting is performed according to the first exposure parameter to obtain the target video for the video call. After the current ambient brightness is detected to be lower than the brightness threshold and the screen supplemental lighting function is enabled, video shooting is performed according to the ambient brightness after performing supplemental lighting and the first exposure parameter configured based on the video call parameter in the video call process, so that the obtained first exposure parameter may match the brightness after performing the supplemental lighting and the quality of the current video call, so that the image brightness of the video call is improved to the maximum extent, and the video image quality is improved.

Optionally, in a possible implementation, the method in this embodiment further includes:
in response to the gaze point being located in the screen area of the first terminal device, the second exposure parameter is obtained according to the second ambient brightness in the current environment, and the second exposure parameter is used to improve the exposure value of the video shot by the first terminal device. The video shooting is performed according to the second exposure parameter to obtain the target video.

For example, in response to the gaze point being located in the screen area of the first terminal device, it indicates that the user is currently gazing at the screen of the first terminal device. In this case, in order to avoid the stimulus on the user's eyes due to screen supplemental lighting, the screen supplemental lighting function is not enabled, but the current (initial) exposure parameter is adjusted according to the second ambient brightness in the current environment to obtain the second exposure parameter, where the second exposure parameter relative to the current exposure parameter can improve the exposure value of the video shot by the first terminal device. Specifically, for example, the current exposure parameter includes a first sensitivity and a first exposure duration, and the second exposure parameter includes a second sensitivity and a second exposure duration, where the first sensitivity is 200, and the second sensitivity is 800; the first exposure duration is 1/60 second, and the second exposure duration is 1/30 second. Compared with the current exposure parameter, the second exposure parameter improves ISO and extends the exposure duration, so that the video shot may have a larger exposure value, and then video shooting is carried out based on the second exposure parameter to obtain the target video with higher brightness, so that the problem that the video brightness is too low under the dark light condition is solved.

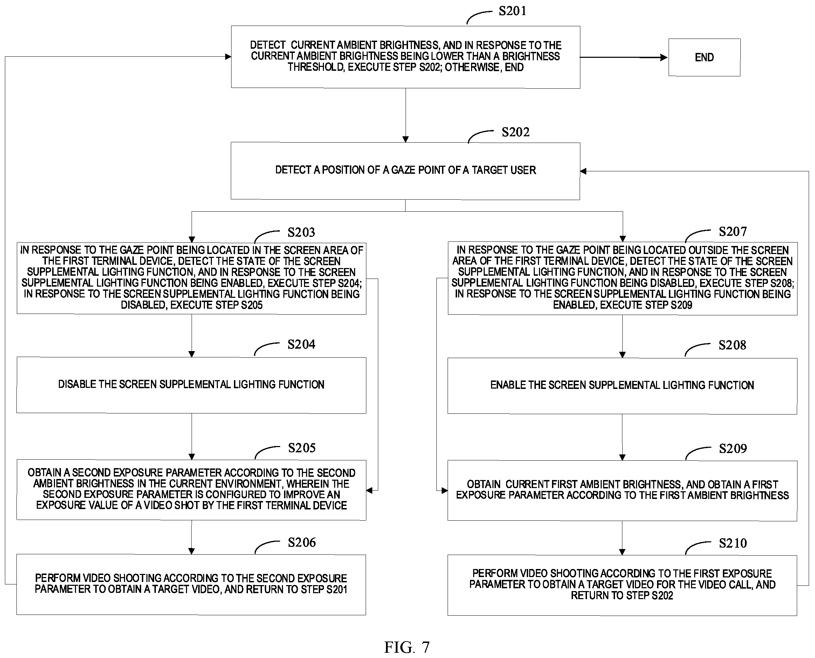

FIG. 7 is a second schematic flowchart of a method for controlling supplemental lighting for a video call according to an embodiment of the present disclosure.

Step S201, detect current ambient brightness, and in response to the current ambient brightness being lower than a brightness threshold, execute step S202, otherwise, end.

Step S202, detect a position of a gaze point of a target user.

Step S203, in response to the gaze point being located in the screen area of the first terminal device, detect the state of the screen supplemental lighting function, and in response to the screen supplemental lighting function being enabled, execute step S204; in response to the screen supplemental lighting function being disabled, execute step S205.

Step S204, disable the screen supplemental lighting function.

Step S205: obtain a second exposure parameter according to the second ambient brightness in the current environment, where the second exposure parameter is used to improve an exposure value of a video shot by the first terminal device.

Step S206, perform video shooting according to the second exposure parameter to obtain a target video, and return to Step S201.

Step S207, in response to the gaze point being located outside the screen area of the first terminal device, detecting the state of the screen supplemental lighting function, and in response to the screen supplemental lighting function being disabled, execute step S208; in response to the screen supplemental lighting function being enabled, execute step S209.

Step S208, enable the screen supplemental lighting function.

Step S209, obtain current first ambient brightness, and obtain a first exposure parameter according to the first ambient brightness.

Step S210, perform video shooting according to the first exposure parameter to obtain a target video for the video call, and return to step S202.

For example, in an initial state, the current ambient brightness is detected, and in response to the current ambient brightness being lower than the brightness threshold, the adaptive supplemental lighting control state is entered, that is, step S202 is started. In the initial state, the screen supplemental lighting function is in the disabled state, in response to detecting that the gaze point being located in the screen area of the first terminal device (the user watches the screen), the screen supplemental lighting is not triggered, but the brightness of the target video is adjusted by adjusting the current exposure parameter to the second exposure parameter (step S205 to S206), and the step S202 is returned to continue to detect the position of the gaze point until it is detected that the gaze point is located outside the screen area of the first terminal device (the user's sight leaves the screen), the screen supplemental lighting function is enabled, the exposure parameter is readjusted to be the first exposure parameter, and the target video is generated based on the first exposure parameter (step S209 to S210).

In this step, in response to detecting that the user gazes at the screen area, the brightness of the shot target image is increased by changing the exposure parameter instead of enabling the screen supplemental lighting function, thereby avoiding the stimulus on the user's eye due to the high brightness screen supplemental lighting, so that the user can watch the screen normally. In response to detecting that the user's sight leaves the screen area, the screen supplemental lighting function is enabled, the exposure parameter is adjusted according to the first ambient brightness after the screen supplemental lighting function is enabled, and the video quality of the generated target video is improved.

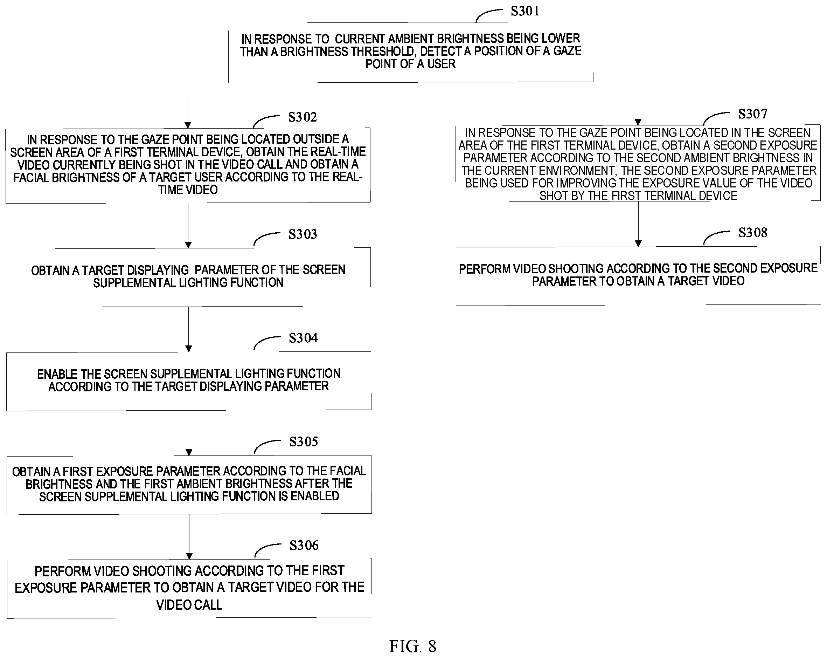

FIG. 8 is a third schematic flowchart of a method for controlling supplemental lighting for a video call according to an embodiment of the present disclosure.

Step S301, in response to current ambient brightness being lower than a brightness threshold, detect a position of a gaze point of a user.

Step S302, in response to the gaze point being located outside a screen area of a first terminal device, obtain the real-time video currently being shot in the video call and obtain facial brightness of a target user according to the real-time video.

The concept of the facial brightness is first described below, the facial brightness of the target user refers to the brightness of the facial area of the target user in the target video obtained by the first terminal device during the video call, and more specifically, the higher the facial brightness (within a certain range) is, the clearer the user's face is. In a specific video call application scenario such as video livestreaming and video conference, the user's facial area is the main display area, and therefore, whether the user's face can clearly be shown in the video often directly determines the user's evaluation of the video quality. In the process of video shooting through the first terminal device, the facial brightness of the target user depends not only on the ambient brightness, but also on factors such as the distance between the user's face and the first terminal device, whether there is an obstruction between the user's face and the light source. Therefore, the adjustment of the exposure parameter only by the ambient brightness may cause a problem of insufficient brightness of the user's face.

Specifically, in this embodiment, firstly, the real-time video currently being shot in the video call is obtained, and the brightness of the facial area of the target user in the real-time video is detected to obtain the facial brightness. Since the real-time video is an image actually viewed by other users (the user of the second terminal device, the relationship between the first terminal device and the second terminal device may refer to the application scenario diagram shown in FIG. 1), the result of detecting the real-time video may show the actual impression of the brightness of the facial area of the target user, and the obtained facial brightness is more real and accurate. After that, the first exposure parameter is determined based on the obtained facial brightness, so that the accuracy of the first exposure parameter may be improved, the target video shot based on the first exposure parameter may improve the brightness of the facial area of the target user, and the facial area feature may be better represented.

Step S303: obtain a target displaying parameter of the screen supplemental lighting function.

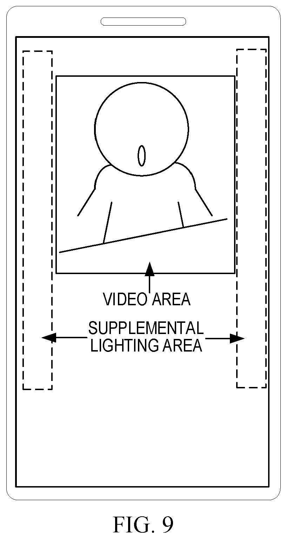

For example, the displaying parameter represents an area of the supplemental lighting area and/or screen brightness of the supplemental lighting area. FIG. 9 is a schematic diagram of a supplemental lighting area according to an embodiment of the present disclosure. As shown in FIG. 9, take a smartphone as an example of the first terminal, the first terminal implements the video call function by running a target application (app). A supplemental lighting area and a video area are displayed in interface of the target application, where the video area is used to display video shot by the first terminal, or video shot by the second terminal (the relationship of the first terminal device and the second device may refer to the application scenario of FIG. 1). The supplemental lighting area is configured to display a pure color image with a high brightness, for example, a white image, so as to provide a light source, thereby implementing the screen supplemental lighting function. The displaying parameter includes at least one parameter such as an area, a position, a displaying color, and a screen brightness of the supplemental lighting area, where the supplemental lighting area may be a continuous area or a plurality of discrete areas, the larger the area of the supplemental lighting area and the higher the screen brightness is, the greater the illumination intensity of the screen supplemental lighting function is. By configuring the target displaying parameter, a screen supplemental lighting function with suitable illumination intensity may be achieved, and the problem that the illumination intensity is too large or too small is avoided.

In a possible implementation, the specific implementation step of step S303 includes:
configuring a target displaying parameter of the screen supplemental lighting function according to the facial brightness. Exemplarily, the configuration of the target displaying parameter is achieved by the facial brightness obtained in step S302, the facial brightness is obtained based on the video shot in real time, and therefore, the brightness level of the facial area of the current target user may be represented. In response to the facial brightness being low, a target displaying parameter corresponding to the strong illumination intensity is configured, and in response to the facial brightness being high, a target displaying parameter corresponding to the weak illumination intensity is configured, so that the facial brightness is at a reasonable level, and the facial resolution of the target user is improved.

In another possible implementation, the specific implementation step of step S303 includes:
obtaining a historical configuration record of the displaying parameter of the screen supplemental lighting function is, and the displaying parameter represents the illumination intensity of the screen supplemental lighting function. Exemplarily, the historical configuration of the screen supplemental lighting function is based on the displaying parameter data in response to the screen supplemental lighting function being enabled before the target user's information is recorded. For example, since the displaying parameter of the screen supplemental lighting function may be configured manually based on personalized requirements of the target user, the target displaying parameter may be directly determined according to the historical configuration record of the displaying parameter, the process of determining the target displaying parameter based on the facial illumination may be omitted, the real-time performance of configuring the target displaying parameter is improved, the personalized configuration requirements of the user is met, and the user experience is improved.

Step S304, enabling the screen supplemental lighting function according to the target displaying parameter.

Step S305: obtaining a first exposure parameter according to the facial brightness and the first ambient brightness after the screen supplemental lighting function is enabled.

For example, after the target displaying parameter is determined, the supplemental lighting area is displayed on the screen of the first terminal device according to the target displaying parameter, so as to increase the ambient brightness, and implement the screen supplemental lighting function with controllable illumination intensity. Then, the first terminal device performs brightness detection to obtain the first ambient brightness after enabling the screen supplemental lighting function, and determines the first exposure parameter in combination with the facial brightness determined in the previous step.

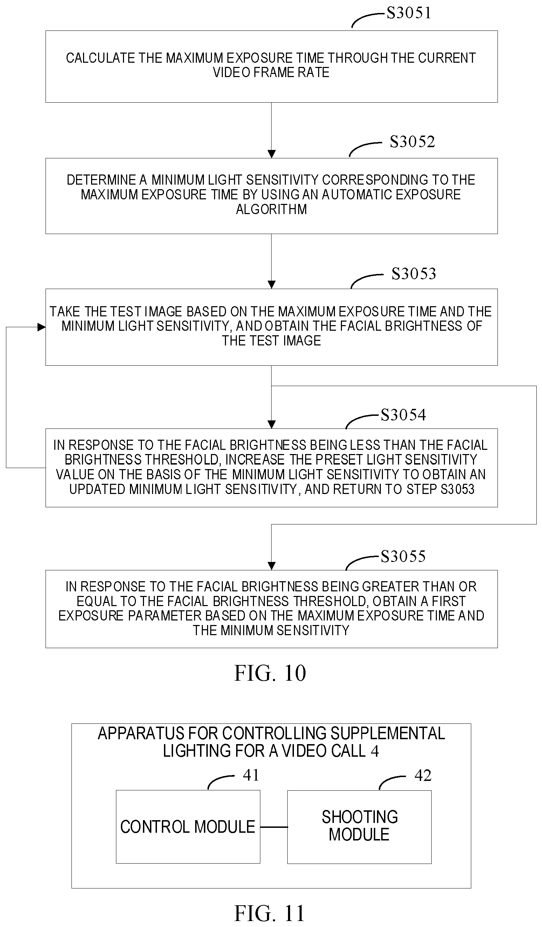

For example, the first terminal device has a fixed aperture value, and the first exposure parameter includes a target exposure duration and a target sensitivity. As shown in FIG. 10, for example, the specific implementation of step S305 includes:
Step S3051: calculating a maximum exposure duration from the current video frame rate.
Step S3052: determining a minimum light sensitivity corresponding to the maximum exposure duration using an automatic exposure algorithm.
step S3053: taking a test image based on the maximum exposure duration and the minimum light sensitivity, and obtaining the facial brightness of the test image.
step S3054: in response to the facial brightness being less than the facial brightness threshold, increasing the predetermined light sensitivity value based on the minimum light sensitivity to obtain an updated minimum light sensitivity, and returning to step s3053.
step S3055: in response to the facial brightness being greater than or equal to the facial brightness threshold, obtaining the first exposure parameter based on the maximum exposure duration and the minimum sensitivity.

For specific implementation methods of steps S3051 and S3052, refer to related descriptions in the embodiment shown in FIG. 5, and details are not described herein again. Then, based on the obtained minimum light sensitivity and the maximum exposure duration, the test image is shot to perform the facial brightness test, if the facial brightness does not meet the requirements, the ISO is improved, and the test is repeated until the facial brightness meets the requirements, so as to obtain the first exposure parameter composed of the minimum light sensitivity meeting the facial brightness requirements. The improvement of ISO increases the noise in the image, and meets the first exposure parameter formed by the minimum sensitivity of the facial brightness requirements, which may further improve the video resolution and the quality of the video call on the basis of ensuring the video brightness.

Step S306: perform video shooting according to the first exposure parameter to obtain a target video for the video call.

Optionally, in another aspect, the method provided in this embodiment further includes:
Step S307: in response to the gaze point being located in the screen area of the first terminal device, obtaining a second exposure parameter according to the second ambient brightness in the current environment, the second exposure parameter being used for improving the exposure value of the video shot by the first terminal device.
Step S308: performing video shooting according to the second exposure parameter to obtain a target video.
Steps S301, S306-S308 are consistent with implementations of steps S101 and S103-S105 in the foregoing embodiments, and details are discussed with reference to related discussions in the embodiments shown in FIG. 2 and FIG. 7, and details are not described herein again.

Corresponding to the method for controlling supplemental lighting for the video call in the foregoing embodiment, FIG. 11 is a structural block diagram of an apparatus for controlling supplemental lighting for a video call according to an embodiment of the present disclosure. For ease of illustration, only portions related to embodiments of the present disclosure are shown. Referring to FIG. 11, an apparatus 4 for controlling supplemental lighting for a video call includes:

The control module 41 is configured to, in response to current ambient brightness being lower than a brightness threshold, enabling a screen supplemental lighting function, and obtain a first exposure parameter according to first ambient brightness after the screen supplemental lighting function is enabled and a video call parameter, where the video call parameter is used for representing a video call quality of a current video call.

The shooting module 42 is configured to performing video shooting according to the first exposure parameter to obtain a target video for the video call.

In an embodiment of the present disclosure, the video call parameter includes a network bandwidth parameter. In response to the obtaining the first exposure parameter according to the first ambient brightness after the screen supplemental lighting function is enabled and the video call parameter, the control module 41 is specifically configured to: obtain the network bandwidth parameter, the network bandwidth parameter representing a current available network bandwidth; determine a target exposure duration based on the network bandwidth parameter; and determine the first exposure parameter according to the first ambient brightness and the target exposure duration.

In one embodiment of the present disclosure, the video call parameter includes a video frame rate. In response to the control module 41 obtaining the first exposure parameter according to the first ambient brightness after the screen supplemental lighting function is enabled and the video call parameter, the control module 41 is specifically configured to: obtain the video frame rate of a real-time video currently being shot in the video call; determine a target exposure duration according to the video frame rate; and determine the first exposure parameter according to the first ambient brightness and the target exposure duration.

In an embodiment of the present disclosure, the control module 41 is further configured to: obtain the real-time video currently being shot by the video call; obtain facial brightness of the target user according to the real-time video; and in response to obtaining the first exposure parameter according to the first ambient brightness after the screen light filling function is enabled, the control module 41 is specifically configured to: obtain the first exposure parameter according to the facial brightness and the first ambient brightness.

**In** an embodiment of the present disclosure, the screen supplemental lighting function is implemented in a supplemental lighting area of a screen, and before enabling the screen supplemental lighting function, the control module 41 is further configured to: configuring a displaying parameter of the screen supplemental lighting function according to the facial brightness, where the displaying parameter represents an area of the supplemental lighting area and/or screen brightness of the supplemental lighting area.

In an embodiment of the present disclosure, the control module 41 is further configured to: a historical configuration record of the displaying parameter of the screen supplemental lighting function, where the displaying parameter represents an illumination intensity of the screen supplemental lighting function; and in response to enabling the screen supplemental lighting function, the control module 41 is specifically configured to: enable the screen supplemental lighting function based on the historical configuration record of the displaying parameter.

In an embodiment of the present disclosure, in response to enabling the screen supplemental lighting function, the control module 41 is specifically configured to: detect a position of a gaze point of a target user; and in response to the gaze point being located outside a screen area of a terminal device, enable the screen supplemental lighting function.

In an embodiment of the present disclosure, in response to detecting the position of the gaze point of the target user, the control module 41 is specifically configured to: obtain an ambient image, and detect a facial area in the ambient image; in response to the facial area being detected, determine the position of the gaze point according to a facial image corresponding to the facial area; and in response to the facial area being not detected, determine that the gaze point is located outside the screen area of the terminal device.

The control module 41 and the shooting module 42 are connected in sequence. The apparatus 4 for controlling supplemental lighting for a video call provided in this embodiment may implement the technical solutions of the foregoing method embodiments, and implementation principles and technical effects thereof are similar, and details are not described herein again in this embodiment.

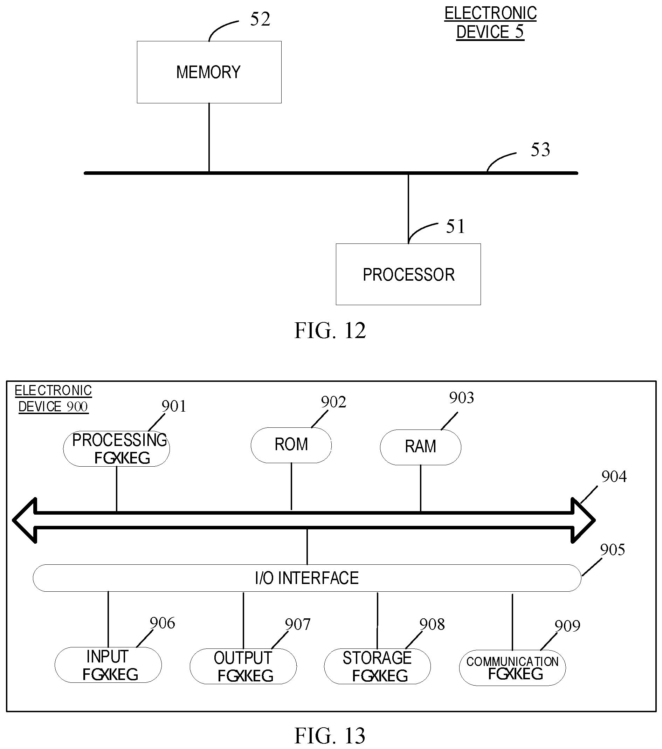

FIG. 12 is a schematic structural diagram of an electronic device according to an embodiment of the present disclosure, the electronic device 5 includes:
a processor 51, and a memory 52 communicatively connected to the processor 51,
the memory 52 stores computer executable instructions,
the processor 51 executes the computer executable instructions stored in the memory 52 to implement the method for controlling supplemental lighting for the video call in the embodiments shown in FIG. 2 to FIG. 10.

Optionally, the processor 51 and the memory 52 are connected using a bus 53.

Related descriptions may be understood with reference to related descriptions and effects corresponding to the steps in the embodiments corresponding to FIG. 2 to FIG. 10, and details are not described herein again.

FIG. 13 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital television (TV), a desktop computer, or the like. The electronic device shown in FIG. 13 is merely an example and should not impose any limitation on the functions and scope of use of the embodiments of the present disclosure.

As shown in FIG. 13, the electronic device 900 may include a processing device (for example, a central processing unit, a graphics processor, etc.) 901, which may perform various appropriate actions and processing according to a program stored in a read only memory (ROM) 902 or a program loaded into a random-access memory (RAM) 903 from a storage device 908. In the RAM 903, various programs and data required by the operation of the electronic device 900 are also stored. The processing device 901, the ROM 902, and the RAM 903 are connected to each other through a bus 904. An input/output (I/O) interface 905 is also connected to the bus 904.

Generally, the following devices may be connected to the I/O interface 905: an input device 906 including, for example, a touch screen, a touch pad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate wirelessly or wired with other devices to exchange data. While FIG. 13 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing device 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of the computer-readable storage medium may include, but are not limited to, an electrical connection having one or more wires, a portable computer diskette, a hard disk, a random access memory (RAM), a read-only memory (ROM), an erasable programmable read-only memory (EPROM), an optical fiber, a portable compact disk read-only memory (CD-ROM), an optical storage device, a magnetic storage device, or any suitable combination thereof. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, including but not limited to: wires, optical cables, Radio Frequency (RF), and the like, or any suitable combination thereof.

The computer-readable medium described above may be included in the electronic device, or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object-oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or implemented in hardware. For example, the first obtaining unit may be further described as "obtaining at least two units of Internet Protocol addresses".

The functions described above may be performed, at least in part, by one or more hardware logic components. For example, without limitation, the exemplary types of hardware logic components that may be used include: Field-Programmable Gate Array (FPGA), Application Specific Integrated Circuit (ASIC), Application Specific Standard (ASSP), System On Chip (SOC), Complex Programmable Logic Device (CPLD), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer diskettes, hard disks, RAMs, ROMs, EPROMs, optical fibers, CD-ROMs, optical storage devices, magnetic storage devices, or any suitable combination of the foregoing.

According to a first aspect, a method for controlling supplemental lighting for a video call is provided according to one or more embodiments of the present disclosure, including: in response to current ambient brightness being lower than a brightness threshold, enabling a screen supplemental lighting function, and obtaining a first exposure parameter according to first ambient brightness after the screen supplemental lighting function is enabled and a video call parameter, where the video call parameter is used for representing a video call quality of a current video call; and performing video shooting according to the first exposure parameter to obtain a target video for the video call.

According to one or more embodiments of the present disclosure, the video call parameter includes a network bandwidth parameter, and the obtaining the first exposure parameter according to the first ambient brightness after the screen supplemental lighting function is enabled and the video call parameter includes obtaining the network bandwidth parameter, the network bandwidth parameter representing a current available network bandwidth: determining a target exposure duration based on the network bandwidth parameter; determining the first exposure parameter according to the first ambient brightness and the target exposure duration.

According to one or more embodiments of the present disclosure, the video call parameter includes a video frame rate; and the obtaining the first exposure parameter according to the first ambient brightness after the screen supplemental lighting function is enabled and the video call parameter includes obtaining the video frame rate of a real-time video currently being shot in the video call; determining a target exposure duration according to the video frame rate; determining the first exposure parameter according to the first ambient brightness and the target exposure duration.

According to one or more embodiments of the present disclosure, the method further includes: obtaining the real-time video currently being shot in the video call; obtaining a facial brightness of a target user according to the real-time video; the obtaining the first exposure parameter according to the first ambient brightness after the screen supplemental lighting function is enabled includes: obtaining the first exposure parameter according to the facial brightness and the first ambient brightness.

According to one or more embodiments of the present disclosure, the screen supplemental lighting function is implemented in a supplemental lighting area of a screen, and before enabling the screen supplemental lighting function, the method further includes: configuring a displaying parameter of the screen supplemental lighting function according to the facial brightness, where the displaying parameter represents an area of the supplemental lighting area and/or a screen brightness of the supplemental lighting area.

According to one or more embodiments of the present disclosure, the method further includes: obtaining a historical configuration record of the displaying parameter of the screen supplemental lighting function, where the displaying parameter represents an illumination intensity of the screen supplemental lighting function; the enabling the screen supplemental lighting function includes: enabling the screen supplemental lighting function based on the historical configuration record of the displaying parameter.

According to one or more embodiments of the present disclosure, the enabling the screen supplemental lighting function includes: detecting a position of a gaze point of a target user; in response to the gaze point being located outside a screen area of a terminal device, enabling the screen supplemental lighting function.

According to one or more embodiments of the present disclosure, the detecting the position of the gaze point of the target user includes: obtaining an ambient image, and detecting a facial area in the ambient image; in response to the facial area being detected, determining the position of the gaze point according to a facial image corresponding to the facial area; in response to the facial area being not detected, determining that the gaze point is located outside the screen area of the terminal device.

According to a second aspect, an apparatus for controlling supplemental lighting for a video call is provided according to one or more embodiments of the present disclosure, including:
a control module, configured to, in response to current ambient brightness being lower than a brightness threshold, enabling a screen supplemental lighting function, and obtain a first exposure parameter according to first ambient brightness after the screen supplemental lighting function is enabled and a video call parameter, where the video call parameter is used for representing a video call quality of a current video call;
a shooting module, configured to, performing video shooting according to the first exposure parameter to obtain a target video for the video call.

According to one or more embodiments of the present disclosure, the video call parameter includes a network bandwidth parameter, and in response to the control module obtaining the first exposure parameter according to the first ambient brightness after the screen supplemental lighting function is enabled and the video call parameter, the control module is specifically configured to: obtain the network bandwidth parameter, the network bandwidth parameter representing a current available network bandwidth; determine a target exposure duration based on the network bandwidth parameter; determine the first exposure parameter according to the first ambient brightness and the target exposure duration.

According to one or more embodiments of the present disclosure, the video call parameter includes a video frame rate; in response to obtaining the first exposure parameter according to the first ambient brightness after the screen supplemental lighting function is enabled and the video call parameter, the control module is specifically configured to: obtain the video frame rate of a real-time video currently being shot in the video call; determine a target exposure duration according to the video frame rate; determine the first exposure parameter according to the first ambient brightness and the target exposure duration.

According to one or more embodiments of the present disclosure, the control module is further configured to: obtain the real-time video currently being shot in the video call; obtain a facial brightness of a target user according to the real-time video; and in response to obtaining the first exposure parameter according to the first ambient brightness after the screen supplemental lighting function is enabled, the control module is specifically configured to: obtain the first exposure parameter according to the facial brightness and the first ambient brightness.

According to one or more embodiments of the present disclosure, the screen supplemental lighting function is implemented in a supplemental lighting area of a screen, and before enabling the screen supplemental lighting function, the control module is further configured to set a displaying parameter of the screen supplemental lighting function according to the facial brightness, where the displaying parameter represents an area of the supplemental lighting area and/or a screen brightness of the supplemental lighting area.

According to one or more embodiments of the present disclosure, the control module is further configured to: obtain a historical configuration record of the displaying parameter of the screen supplemental lighting function, where the displaying parameter represents an illumination intensity of the screen supplemental lighting function; and in response to the control module enabling the screen supplemental lighting function, the control module is specifically configured to: enable the screen supplemental lighting function based on the historical configuration record of the displaying parameter.

According to one or more embodiments of the present disclosure, in response to the control module enabling the screen supplemental lighting function, the control module is specifically configured to: detect a position of a gaze point of a target user; and in response to the gaze point being located outside a screen area of a terminal device, enable the screen supplemental lighting function.

According to one or more embodiments of the present disclosure, in response to detecting the position of the gaze point of the target user, the control module is specifically configured to: obtain an ambient image, and detecting a facial area in the ambient image; in response to the facial area being detected, determine the position of the gaze point according to a facial image corresponding to the facial area; in response to the facial area being not detected, determine that the gaze point is located outside the screen area of the terminal device.

According to a third aspect, an electronic device is provided according to one or more embodiments of the present disclosure, including: a processor, and a memory communicatively connected to the processor;
the memory stores computer executable instructions;
the processor executes the computer executable instructions stored in the memory to implement the method for controlling supplemental lighting for a video call according to the first aspect and various possible designs of the first aspect.

According to a fourth aspect, a computer readable storage medium is provided according to one or more embodiments of the present disclosure, the computer readable storage medium stores computer executable instructions, and the computer executable instructions, when executed by the processor, implement the method for controlling supplemental lighting for a video call as described in the first aspect and various possible designs of the first aspect.

According to a fifth aspect, an embodiment of the present disclosure provides a computer program, where the computer program, when executed by a computer, implements the method for controlling supplemental lighting for a video call according to the first aspect and various possible designs of the first aspect.

According to a sixth aspect, an embodiment of the present disclosure provides a computer program product, including a computer program, where the computer program, when executed by a processor, implements the method for controlling supplemental lighting for a video call according to the first aspect and various possible designs of the first aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for controlling supplemental lighting for a video call, comprising:
in response to current ambient brightness being lower than a brightness threshold, enabling a screen supplemental lighting function, and obtaining a first exposure parameter according to first ambient brightness after the screen supplemental lighting function is enabled and a video call parameter, wherein the video call parameter is used for representing a video call quality of a current video call;
performing video shooting according to the first exposure parameter to obtain a target video for the video call.

2. The method of claim 1, wherein the video call parameter comprises a network bandwidth parameter, and the obtaining the first exposure parameter according to the first ambient brightness after the screen supplemental lighting function is enabled and the video call parameter comprises:
obtaining the network bandwidth parameter, the network bandwidth parameter representing a current available network bandwidth;
determining a target exposure duration based on the network bandwidth parameter;
determining the first exposure parameter according to the first ambient brightness and the target exposure duration.

3. The method of claim 1, wherein the video call parameter comprises a video frame rate; and the obtaining the first exposure parameter according to the first ambient brightness after the screen supplemental lighting function is enabled and the video call parameter comprises:
obtaining the video frame rate of a real-time video currently being shot in the video call;
determining a target exposure duration according to the video frame rate;
determining the first exposure parameter according to the first ambient brightness and the target exposure duration.

4. The method of any of claims 1 to 3, further comprising:
obtaining the real-time video currently being shot in the video call;
obtaining facial brightness of a target user according to the real-time video;
the obtaining the first exposure parameter according to the first ambient brightness after the screen supplemental lighting function is enabled comprises:
obtaining the first exposure parameter according to the facial brightness and the first ambient brightness.

5. The method of any of claims 1 to 4, wherein the screen supplemental lighting function is implemented in a supplemental lighting area of a screen, and before enabling the screen supplemental lighting function, the method further comprises:
configuring a displaying parameter of the screen supplemental lighting function according to the facial brightness, wherein the displaying parameter represents an area of the supplemental lighting area and/or screen brightness of the supplemental lighting area.

6. The method of any of claims 1 to 5, further comprising:
obtaining a historical configuration record of the displaying parameter of the screen supplemental lighting function, wherein the displaying parameter represents an illumination intensity of the screen supplemental lighting function;
the enabling the screen supplemental lighting function comprises:
enabling the screen supplemental lighting function based on the historical configuration record of the displaying parameter.

7. The method of any of claims 1 to 5, wherein the enabling the screen supplemental lighting function comprises:
detecting a position of a gaze point of a target user;
in response to the gaze point being located outside a screen area of a terminal device, enabling the screen supplemental lighting function.

8. The method of claim 7, wherein the detecting the position of the gaze point of the target user comprises:
obtaining an ambient image, and detecting a facial area in the ambient image;
in response to the facial area being detected, determining the position of the gaze point according to a facial image corresponding to the facial area;
in response to the facial area being not detected, determining that the gaze point is located outside the screen area of the terminal device.

9. An apparatus for controlling supplemental lighting for a video call, comprising:
a control module, configured to, in response to current ambient brightness being lower than a brightness threshold, enabling a screen supplemental lighting function, and obtain a first exposure parameter according to first ambient brightness after the screen supplemental lighting function is enabled and a video call parameter, wherein the video call parameter is used for representing a video call quality of a current video call;
a shooting module, configured to, performing video shooting according to the first exposure parameter to obtain a target video for the video call.

10. An electronic device, comprising: a processor, and a memory communicatively connected to the processor;
the memory stores computer executable instructions;
the computer executable instructions stored in the memory, when executed by the processor, implement the method for controlling supplemental lighting for a video call of any of claims 1 to 8.

11. A computer readable storage medium storing computer executable instructions, wherein the computer executable instructions, when executed by the processor, implement the method for controlling supplemental lighting for a video call of any of claims 1 to 8.

12. A computer program, wherein the computer program, when executed by a computer, implements the method for controlling supplemental lighting for a video call of any of claims 1 to 8.

13. A computer program product, comprising a computer program, wherein the computer program, when executed by a processor, implements the method for controlling supplemental lighting for a video call of any of claims 1 to 8.
